# FASCICULE DE BREVET EUROPEEN

(11) **EP 0 768 140 B1**
(45) Date de publication et mention de la délivrance du brevet: **03.06.1998**
(21) Numéro de dépôt: 96402145.5
(22) Date de dépôt: 10.10.1996
(51) Int. Cl.: B23K 26/18, B23K 26/00

(54) **Procédé de perçage de pièces au laser et matériau d'arrêt utilisé**
Verfahren zum Bohren von Werkstücken mittels Laserstrahl und damit benutztes Abschirmungsmaterial
Process for drilling works with a laser and barrier material used herewith

(30) Priorité: 11.10.1995 FR 9511907
(43) Date de publication de la demande: 16.04.1997
(73) Titulaire: SOCIETE NATIONALE D'ETUDE ET DE CONSTRUCTION DE MOTEURS D'AVIATION Snecma, F-75015 Paris (FR)
(72) Inventeur: Belgacem, Catherine Hélène Françoise, 92600 Asnieres (FR); Salfrant, Hervé, 94700 Maison Alfort (FR); Guesdon, Hervé Jacques Christian, 75020 Paris (FR)

(56) Documents cités:
- EP-A- 0 347 053
- FR-A- 2 482 495
- GB-A- 2 243 320
- GB-A- 2 249 279
- US-A- 5 049 722
- US-A- 5 140 127

## Description

La présente invention concerne un procédé de perçage de pièces au laser, notamment des aubes de turbine et autres pièces destinées à un turboréacteur comportant des zones formant une cavité ouverte ou fermée et l'invention concerne également un matériau d'arrêt de faisceau utilisé pour la mise en oeuvre dudit procédé.

Il est connu de réaliser des perçages, notamment de faible diamètre, dans des zones de relative faible épaisseur de pièces, en utilisant un faisceau de haute énergie tel qu'il est procuré par une source laser. Les applications visées par l'invention comportent notamment des pièces aéronautiques en superalliages telles que des aubes refroidies de turbine munies de cavités internes et de circuits internes de refroidissement à canaux, des trous d'évacuation d'air étant ménagés sur des zones de surfaces externes de la pièce. D'autres pièces entrant dans les parties chaudes d'un turboréacteur telle que la chambre de combustion comportent également des perçages.

Un exemple de procédé et dispositif de perçage au laser est décrit par FR-A-2 547 519. Dans les applications citées, la source laser utilisée est notamment une source de type YAG. Des exemples d'aubes de turbine refroidies sont décrits par FR-A-2 689 176 et FR-A-2 678 318.

Lors du perçage au laser des trous dans certaines zones de pièces, il arrive fréquemment en fonction de la configuration des pièces que le faisceau, en l'absence de moyen d'arrêt, atteigne et soit susceptible d'endommager des zones de pièces destinées à être conservées intactes. Des solutions ont déjà été proposées pour éviter ces inconvénients. Par exemple, FR-A-2 699 844 décrit un dispositif permettant de protéger une paroi de pièce sur le trajet d'un faisceau laser émergent. Dans certaines applications, notamment pour le perçage de parois d'aubes de turbine à cavités internes, un matériau d'arrêt peut être introduit avant le perçage à l'intérieur des cavités et retiré après le perçage. Des exemples d'utilisation de ces techniques sont décrits par GB-A-2 243 320 (selon ce document le matériau d'arrêt comprend polytétrafluoroéthylène, méthacrylate de méthyle et un imitiateur de polymérisation), GB-A-2 249 279,
US-A-5 140 127, US-A-5 049 722. Toutefois les produits utilisés pour constituer la barrière d'arrêt du faisceau laser n'ont pas donné entière satisfaction pour certaines applications et des problèmes subsistent dans le mode d'utilisation pour la mise en place et l'élimination de ces produits qui ne doivent pas laisser de traces à l'intérieur des cavités d'aubes.

Un matériau d'arrêt de faisceau laser disposable à l'intérieur d'une cavité de pièce à percer évitant les inconvénients des solutions connues antérieures et répondant aux conditions et aux buts recherchés est obtenu par le mélange des produits suivants : un composé monomère pris dans le groupe méthacrylate de dicyclopentenyloxyéthyl/DCPOEMA, méthacrylate de méthyle/MMA et isobornyl méthacrylate/ISOBORMA, un produit durcisseur constitué de peroxyde de benzoïle/BPO, un produit catalyseur constitué de NN-diéthylaniline/DEA, un agent de réticulation constitué de diméthacrylate d'éthylène glycol/DIMEG, un additif de compatibilisation et une charge prise dans le groupe chlorure de sodium et alumine hydratée.

La mise en oeuvre dans un procédé de perçage de pièces au laser comporte les étapes suivantes :
- (a) dosage des produits ;
- (b) mélange des produits comprenant : un composé monomère pris dans le groupe méthacrylate de dicyclopentenyloxyéthyl/DCPOEMA, méthacrylate de méthyle/MMA et isobornyl méthacrylate/ISOBORMA, un produit durcisseur constitué de peroxyde de benzoïle/BPO, un produit catalyseur constitué de NN-diéthylaniline/DEA, un agent de réticulation constitué de diméthacrylate d'éthylène glycol/DIMEG, un additif de compatibilisation et une charge prise dans le groupe chlorure de sodium et alumine hydratée, puis malaxage et dégazage ;
- (c) remplissage d'au moins une cavité de pièce par injection du mélange obtenu à l'étape (b) devant constituer un matériau d'arrêt de faisceau laser ;
- (d) polymérisation durant 1 à 3 heures ;
- (e) perçage au laser de trous dans une paroi de la pièce, débouchant dans la cavité qui a été remplie du matériau d'arrêt à l'étape (c) ;
- (f) élimination du matériau d'arrêt par pyrolyse à la température de 450°C pendant 5 heures.

D'autres caractéristiques et avantages de l'invention seront mieux compris à la lecture de la description qui va suivre d'un mode de réalisation de l'invention en référence aux dessins annexés sur lesquels :

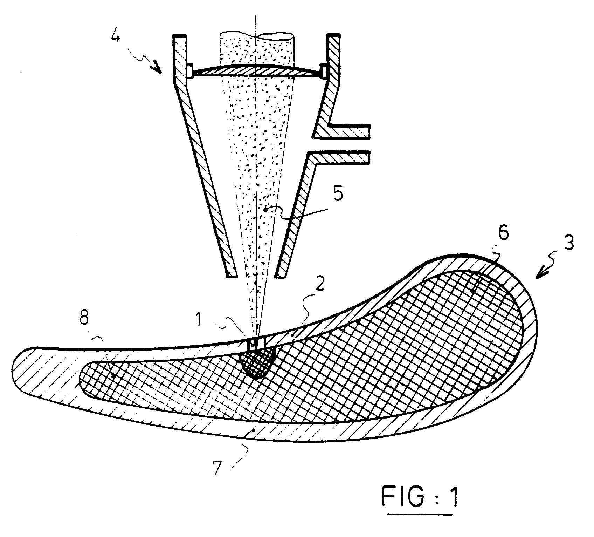

- la figure 1 représente une vue schématique montrant la mise en oeuvre de l'étape du perçage dans le procédé de perçages de pièces au laser conforme à l'invention.

Dans l'exemple d'application du procédé de perçage de pièce au laser schématisé sur la figure 1, des trous 1 sont percés sur une paroi extérieure 2 de la pale d'une aube 3 de turbine représentée en coupe transversale. Le perçage est effectué au moyen d'un équipement à faisceau laser, connu en soi, schématisé en 4 et comportant par exemple une source de type YAG fonctionnant en mode percussion ou trépanation où les principaux paramètres de réglage sont le niveau d'énergie, le temps d'impulsion, le nombre d'impulsions et la pression du gaz, par exemple oxygène, qui entoure le faisceau laser 5. Pour le perçage d'une pièce telle que l'aube 3 dans laquelle le trou 1 à percer débouche dans une cavité interne 6, des dispositions particulières sont prévues pour éviter l'endommagement de la surface interne 7 de cavité située en face du trou 1 lorsque le faisceau laser 5 traverse le trou. Afin de protéger la surface 7, la solution retenue consiste à remplir la cavité 6 d'un matériau 8 susceptible d'arrêter le faisceau 5.

Grâce à un choix remarquable dans la définition de composition du matériau d'arrêt 8, l'invention permet une nette amélioration de l'efficacité de la protection en évitant tout impact et tout endommagement sur la surface protégée telle que 7.

Ces résultats nettement améliorés ont ainsi été obtenus en utilisant les mélanges suivants dans la composition des matériaux d'arrêt 7 de faisceau laser 5 lors des opérations de perçages de trous 1 dans une paroi 2 de pièce 3 débouchant dans une cavité 6. Les proportions de chaque constituant sont indiquées en grammes. Les constituants comprennent dans chaque cas :
- un produit monomère, soit méthacrylate de dicyclopentenyloxyéthyl/DCPOEMA, soit méthacrylate de méthyle/MMA, soit isobornyl méthacrylate/ISOBORMA ;
- un produit durcisseur qui est du peroxyde de benzoïle/BPO ;
- un produit catalyseur qui est de la N,N-diéthylaniline/DEA;
- un agent de réticulation qui est du diméthacrylate d'éthylène glycol/DIMEG ;
- un additif de compatibilisation fourni par la société BYKCHEMIE sous la référence commerciale BYK-W995 ;
- un produit de charge, soit chlorure de sodium NaCl, soit alumine hydratée Al₂(OH)₃

### EXEMPLE 1

DCPOEMA 104 ; BPO1; DEA 0,24; DIMEG 5; additif de compatibilisation 7 ; alumine hydratée 412,9.

### EXEMPLE 2

DCPOEMA 100; BPO1; DEA 0,24; DIMEG 5; additif de compatibilisation 7; alumine hydratée 380.

### EXEMPLE 3

DCPOEMA 101; BPO1; DEA O,24; DIMEG 5; additif de compatibilisation 7; chlorure de sodium 247.

### EXEMPLE 4

MMA 78,4 et sous forme polymère 21,6; BPO2; DEA O,48; DIMEG 5; additif de compatibilisation 7; alumine hydratée 317.

### EXEMPLE 5

MMA 78,4 et sous forme polymère 21,6; BPO2; DEA 0,48; DIMEG 5; additif de compatibilisation 7; chlorure de sodium 157.

### EXEMPLE 6

ISOBORMA 100; BPO2; DEA 0,36; DIMEG 5; additif de compatibilisation 7; alumine hydratée 366.

### EXEMPLE 7

ISOBORMA 105; BPO2; DEA O,36; DIMEG 5; additif de compatibilisation 7; alumine hydratée 300.

### EXEMPLE 8

ISOBORMA 100; BPO2; DEA 0,36; DIMEG 5; additif de compatibilisation 7; chlorure de sodium 178.

Le procédé de perçage au laser de trous sur une paroi de cavité de pièce comporte les étapes suivantes :
- (a) dosage des produits qui ont été précédemment décrits, dans les propositions indiquées ;
- (b) mélange desdits produits puis malaxage et dégazage ;
- (c) remplissage de la cavité telle que 6 d'une pièce telle que 3 par injection du mélange obtenu à l'étape (b) de manière à constituer un matériau d'arrêt de faisceau laser ; le remplissage par injection rendu possible par le choix des produits et par la détermination conforme à l'invention des compositions est particulièrement avantageux lorsque les cavités de pièce présentent une géométrie complexe, ce qui est notamment le cas pour certaines applications à des aubes de turbine refroidies ;
- (d) polymérisation durant 1 à 3 heures ;
- (e) perçage au laser de trous tels que 1 dans une paroi 2 de la pièce 3, débouchant dans la cavité 6 qui a été remplie du matériau d'arrêt à l'étape (c) ;
- (f) élimination du matériau d'arrêt par pyrolyse à une température comprise entre 400°C et 500°C pendant 5 heures.

Les résultats obtenus sur pièces d'essai ont confirmé l'efficacité du matériau d'arrêt conforme à l'invention et de son mode de mise en place qui présente par ailleurs des avantages de gain de temps et de simplification de la mise en oeuvre. En effet des examens pratiqués à la binoculaire à grossissement entre 10 et 30 ont montré après découpe des pièces d'essai l'absence d'impact sur les surfaces protégées. L'absence de résidus constatée à l'intérieur des cavités a en outre confirmé l'efficacité de l'élimination du matériau d'arrêt après perçage mise en oeuvre par l'invention.

## Revendications

1. Matériau d'arrêt de faisceau laser disposable à l'intérieur d'une cavité de pièce à percer obtenu par le mélange des produits suivants :
- un composé monomère pris dans le groupe méthacrylate de dicyclopentenyloxyéthyl/DCPOEMA, méthacrylate de méthyle/MMA et isobornyl méthacrylate/ISOBORMA,
- un produit durcisseur constitué de peroxyde de benzoïle/BPO,
- un produit catalyseur constitué de NN-diéthylaniline/DEA,
- un agent de réticulation constitué de diméthacrylate d'éthyline glycol/DIMEG,
- un additif de compatibilisation,
- une charge prise dans le groupe chlorure de sodium et alumine hydratée.

2. Matériau d'arrêt de faisceau laser selon la revendication 1 dans lequel les constituants sont mélangés dans les proportions suivantes en grammes :
ISOBORMA 100 à 105; BP0 2; DEA 0,36; DIMEG 5; additif de compatibilisation 7; alumine hydratée 300 à 366.

3. Matériau d'arrêt de faisceau laser selon la revendication 1 dans lequel les constituants sont mélangés dans les proportions suivantes en grammes :
ISOBORMA 100; BP0 2; DEA 0,36; DIMEG 5; additif de compatibilisation 7; chlorure de sodium 178.

4. Matériau d'arrêt de faisceau laser selon la revendication 1 dans lequel les constituants sont mélangés dans les proportions suivantes en grammes :
MMA 78,4 et sous forme PMMA 21,6; BP0 2; DEA 0,48; DIMEG 5;
additif de compatibilisation 7; alumine hydratée 317.

5. Matériau d'arrêt de faisceau laser selon la revendication 1 dans lequel les constituants sont mélangés dans les proportions suivantes en grammes :
MMA 78,4 et sous forme PMMA 21,6; BP0 2; DEA 0,48; DIMEG 5; additif de compatibilisation 7; chlorure de sodium 157.

6. Matériau d'arrêt de faisceau laser selon la revendication 1 dans lequel les constituants sont mélangés dans les proportions suivantes en grammes :
DCPOEMA 100 à 104; BP0 1; DEA O,24; DIMEG 5; additif de compatibilisation 7; alumine hydratée 380 à 412,9.

7. Matériau d'arrêt de faisceau laser selon la revendication 1 dans lequel les constituants sont mélangés dans les proportions suivantes en grammes :
DCPOEMA 101; BP01; DEA 0,24; DIMEG 5; additif de compatibilisation 7; chlorure de sodium 247.

8. Procédé de perçage au laser de pièces sur une paroi de cavité comportant les étapes suivantes :
- (a) dosage des produits ;
- (b) mélange des produits constituant le matériau d'arrêt défini par l'une des revendications 1 à 7 puis malaxage et dégazage ;
- (c) remplissage d'au moins une cavité (6) de pièce (3) par injection du mélange obtenu à l'étape (b) devant constituer un matériau d'arrêt (8) de faisceau laser ;
- (d) polymérisation durant 1 à 3 heures;
- (e) perçage au laser de trous (1) dans une paroi (2) de la pièce (3), débouchant dans la cavité (6) qui a été remplie du matériau d'arrêt (8) à l'étape (c);
- (f) élimination du matériau d'arrêt par pyrolyse à la température comprise entre 400°C et 500°C pendant 5 heures.

## Claims

1. Laser-beam barrier material which can be placed inside a cavity of a component to be drilled, obtained by mixing the following products:
- a monomer compound taken from the group dicyclopentenyloxyethyl methacrylate/DCPOEMA, methyl methacrylate/MMA and isobornyl methacrylate/ISOBORMA,
- a curing agent consisting of benzoyl peroxide/BPO,
- a catalyst consisting of N,N-diethylaniline/DEA,
- a crosslinking agent consisting of ethylene glycol dimethacrylate/DIMEG,
- a compatibilizing additive,
- a filler taken from the group sodium chloride and hydrated alumina.

2. Laser-beam barrier material according to Claim 1, in which the constituents are mixed in the following proportions in grams:
ISOBORMA 100 to 105; BPO 2; DEA 0.36; DIMEG 5; compatibilizing additive 7; hydrated alumina 300 to 366.

3. Laser-beam barrier material according to Claim 1, in which the constituents are mixed in the following proportions in grams:
ISOBORMA 100; BPO 2; DEA 0.36; DIMEG 5; compatibilizing additive 7; sodium chloride 178.

4. Laser-beam barrier material according to Claim 1, in which the constituents are mixed in the following proportions in grams:
MMA 78.4 and in PMMA form 21.6; BPO 2; DEA 0.48; DIMEG 5; compatibilizing additive 7; hydrated alumina 317.

5. Laser-beam barrier material according to Claim 1, in which the constituents are mixed in the following proportions in grams:
MMA 78.4 and in PMMA form 21.6; BPO 2; DEA 0.48; DIMEG 5; compatibilizing additive 7; sodium chloride 157.

6. Laser-beam barrier material according to Claim 1, in which the constituents are mixed in the following proportions in grams:
DCPOEMA 100 to 104; BPO 1; DEA 0.24; DIMEG 5; compatibilizing additive 7; hydrated alumina 380 to 412.9.

7. Laser-beam barrier material according to Claim 1, in which the constituents are mixed in the following proportions in grams:
DCPOEMA 101; BPO 1; DEA 0.24; DIMEG 5; compatibilizing additive 7; sodium chloride 247.

8. Process for the laser drilling of components on a cavity wall, comprising the following steps:
- (a) metering the products;
- (b) mixing the products constituting the barrier material defined by one of Claims 1 to 7, followed by plasticating and venting;
- (c) filling at least one cavity (6) of component (3) by injecting the mixture, obtained at step (b), which is to form a laser-beam barrier material (8);
- (d) polymerizing for 1 to 3 hours;
- (e) laser drilling, in a wall (2) of the component (3), holes (1) emerging in the cavity (6) which has been filled with a barrier material (8) at step (c);
- (f) removal of the barrier material by pyrolysis at a temperature of between 400°C and 500°C for 5 hours.

## Patentansprüche

1. Material zur Laserstrahlabschirmung, das sich im Innern eines Hohlraums eines zu bohrenden Werkstücks anordnen läßt, wobei das Material durch das Mischen folgender Produkte gewonnen wird:
- eine monomere Verbindung aus der Gruppe Dicyclopentenyloxyethylmethacrylat/ DCPOEMA, Methylmethacrylat/MMA und Isobornylmethacrylate/ISOBORMA,
- ein Härter, bestehend aus Benzoilperoxyd/BPO,
- ein Katalysator, bestehend aus N,N-diethylanilin/DEA,
- ein Vernetzungswirkstoff, bestehend aus Ethylinglycoldimethacrylat/DIMEG,
- ein Kompatibilisierungsadditiv,
- ein Füllstoff aus der Gruppe Natriumchlorid und Aluminiumhydroxid.

2. Material zur Laserstrahlabschirmung nach Anspruch 1, bei dem die Bestandteile in den folgenden Verhältnissen in Gramm gemischt sind:
ISOBORMA 100 bis 105; BPO 2; DEA 0,36; DIMEG 5; Kompatibilisierungsadditiv 7; Aluminiumhydroxid 300 bis 366.

3. Material zur Laserstrahlabschirmung nach Anspruch 1, bei dem die Bestandteile in den folgenden Verhältnissen in Gramm gemischt sind:
ISOBORMA 100; BPO 2; DEA 0,36; DIMEG 5; Kompatibilisierungsadditiv 7; Aluminiumhydroxid 178.

4. Material zur Laserstrahlabschirmung nach Anspruch 1, bei dem die Bestandteile in den folgenden Verhältnissen in Gramm gemischt sind:
MMA 78,4 und in der Form PMMA 21,6; BPO 2; DEA 0,48; DIMEG 5; Kompatibilisierungsadditiv 7; Aluminiumhydroxid 317.

5. Material zur Laserstrahlabschirmung nach Anspruch 1, bei dem die Bestandteile in den folgenden Verhältnissen in Gramm gemischt sind:
MMA 78,4 und in der Form PMMA 21,6; BPO 2; DEA 0,48; DIMEG 5; Kompatibilisierungsadditiv 7; Aluminiumhydroxid 157.

6. Material zur Laserstrahlabschirmung nach Anspruch 1, bei dem die Bestandteile in den folgenden Verhältnissen in Gramm gemischt sind:
DCPOEMA 100 bis 104; BPO 1; DEA 0,24; DIMEG 5; Kompatibilisierungsadditiv 7; Aluminiumhydroxid 380 bis 412,9.

7. Material zur Laserstrahlabschirmung nach Anspruch 1, bei dem die Bestandteile in den folgenden Verhältnissen in Gramm gemischt sind:
DCPOEMA 101; BPO 1; DEA 0,24; DIMEG 5; Kompatibilisierungsadditiv 7; Aluminiumhydroxid 247.

8. Verfahren zum Laserbohren von Werkstücken auf der Wandung eines Hohlraums mit den folgenden Verfahrensschritten:
- (a) Dosieren der Produkte,
- (b) Mischen der Produkte, die das durch einen der Ansprüche 1 bis 7 definierte Abschirmungsmaterial bilden,
- (c) Füllen wenigstens eines Hohlraums (6) des Werkstücks (3) durch Einspritzen der in dem Verfahrensschritt (b) gewonnenen Mischung, das ein Laserstrahlabschirmungsmaterial (8) bilden soll,
- (d) Polymerisation während 1 bis 3 Stunden,
- (e) Laserbohren von Löchern (1) in einer Wandung (2) des Werkstücks (3), die in dem Hohlraum münden, der in dem Verfahrensschritt (c) mit dem Abschirmungsmaterial gefüllt wurde,
- (f) Eliminieren des Abschirmungsmaterials durch Pyrolyse bei einer Temperatur zwischen 400°C und 500°C während 5 Stunden.
